# EUROPÄISCHE PATENTSCHRIFT

(11) **EP 0 509 334 B1**
(45) Veröffentlichungstag und Bekanntmachung des Hinweises auf die Patenterteilung: **19.03.1997**
(21) Anmeldenummer: 92105711.3
(22) Anmeldetag: 02.04.1992
(51) Int. Cl.: B01D 33/073, B01D 33/44, B01D 37/04

(54) **Verfahren zum Sieben und Filtern von Feststoffsuspensionen auf Trommel- oder Bandmaschinen**
Method for screening and filtering solid material suspensions with drum or band machines
Procédé pour le tamisage et la filtration de suspensions de matières solides avec des machines à tambour ou à bande

(30) Priorität: 05.04.1991 DE 4110999
(43) Veröffentlichungstag der Anmeldung: 21.10.1992
(73) Patentinhaber: PASSAVANT-WERKE AG, D-65322 Aarbergen 7 (DE)
(72) Erfinder: Seel, Karl, W-6209 Aarbergen 3 (DE); Schranz, Peter, W-5429 Katzenelnbogen (DE)

(56) Entgegenhaltungen:
- DE-A- 1 111 002
- DE-A- 1 198 751
- DE-A- 1 218 405
- GB-A- 1 280 534
- US-A- 3 960 726

## Beschreibung

Die Erfindung befaßt sich mit einem neuen Verfahren zur Steuerung einer Feststoffsuspensionen siebenden und filternden Trommel- oder Bandmaschine, die eine Rückspüleinrichtung für die Sieb- und Filterflächen und einen drehzahlregelbaren Umlaufantrieb aufweist, und bei der die Spiegeldifferenz zwischen Schmutz- und Reinwasserseite laufend abgefühlt wird.

Eine solche zur Aufbereitung von Papierstoff vorgesehene Trommelmaschine ist aus der DE-A-1 111 002 bekannt. Die Umdrehungszahl der Siebtrommel wird von einem in der Beschickungskammer vorgesehenen, den Flüssigkeitsspiegel auf der Zulaufseite abtastenden Fühler in der Weise geregelt, daß die Umlaufgeschwindigkeit bei Ansteigen des Spiegels erhöht wird. Die Rückspüleinrichtung wird bei dieser Maschine ununterbrochen betrieben.

In der Praxis bei der Abwasserreinigung würde diese kontinuierliche Steuerung zu häufigen Drehzahländerungen führen. Die ständige Rückspülung würde einen hohen Verschleiß der Sieb- und Filtergewebe und einen hohen Rückspülwasserbedarf verursachen.

Die Aufgabe, diese Nachteile der bekannten Steuerung zu beseitigen, wird gemäß der Erfindung dadurch gelöst, daß eine bestimmte Spiegeldifferenz zwischen Schmutz- und Reinwasserseite voreingestellt wird, daß der Umlaufantrieb derart drehzahlgeregelt wird, daß die voreingestellte Spiegeldifferenz eingehalten wird, und daß die Rückspüleinrichtung erst dann eingeschaltet wird, wenn eine voreingestellte Höchstdrehzahl erreicht ist. Vorzugsweise wird die Drehzahl vor dem Einschalten der Rückspüleinrichtung auf einen geringeren Wert zurückgeregelt, damit die Rückspülung effektiver und der Spülwasserverbrauch vermindert wird. Diese Art der Steuerung vermeidet große Drehzahlsprünge und beansprucht die Bespannung wesentlich geringer als das bislang praktizierte Steuer- und Rückspülverfahren.

Für eine aus mindestens zwei parallel beaufschlagten Maschinen bestehende Sieb- und Filteranlage mit Zulaufverteileinrichtung wird vorgeschlagen, daß ein Minimalwert für den Zulaufstrom voreingestellt wird, und daß bei Unterschreitung des Minimalwerts der Zulauf zu einer der Maschinen verschlossen wird. Die Rückspülregelung ist dann für diese Maschine ebenfalls außer Betrieb gesetzt, Der Umlaufantrieb dieser Maschine wird vorzugsweise vor Absperren des Zulaufs außer Betrieb genommen.

Für den umgekehrten Fall eines Ansteigens des Zulaufstroms über einen Höchstwert wird vorgeschlagen, im Zulauf zu jeder Maschine eine Spiegelmeßeinrichtung vorzusehen und den Zulauf bei überschreiten eines voreingestellten Werts des Spiegels zu drosseln und bei weiterem überschreiten den Zulauf ganz zu schließen. Die Maschine wird erst wieder beaufschlagt, wenn die Spiegeldifferenz durch Rückspülen den voreingestellten Höchstwert unterschritten hat.

## Patentansprüche

1. Verfahren zur Steuerung einer Feststoffsuspensionen siebenden und filternden Trommel- oder Bandmaschine mit einer Rückspüleinrichtung der Sieb- und Filterflächen der Trommel- oder Bandmaschine, wobei die Spiegeldifferenz zwischen Schmutz- und Reinwasserseite laufend abgefühlt wird, und wobei der Umlaufantrieb der Trommel- oder Bandmaschine drehzahlregelbar ist, **dadurch gekennzeichnet**, daß eine bestimmte Spiegeldifferenz zwischen Schmutz- und Reinwasserseite voreingestellt wird, daß der Umlaufantrieb derart drehzahlgeregelt wird, daß die voreingestellte Spiegeldifferenz eingehalten wird, und daß die Rückspüleinrichtung erst dann eingeschaltet wird, wenn eine voreingestellte Höchstdrehzahl erreicht ist.

2. Verfahren nach Anspruch 1, **dadurch gekennzeichnet**, daß vor dem Einschalten der Rückspülung die Drehzahl auf einen geringeren Wert zurückgeregelt wird.

3. Verfahren nach Anspruch 1 oder 2, **dadurch gekennzeichnet**, daß die Zahl der Umläufe der Trommel- bzw. Bandmaschine voreingestellt wird, bei der die Rückspüleinrichtung eingeschaltet ist.

4. Verfahren nach Anspruch 3, **dadurch gekennzeichnet**, daß die Drehzahl nach Abschalten der Rückspülung wieder von dem voreingestellten Wert der Spiegeldifferenz gesteuert wird.

5. Verfahren nach einem oder mehreren der Ansprüche 1 bis 4, mit mindestens zwei parallel beaufschlagten Maschinen und mit einer Zulaufverteileinrichtung, **dadurch gekennzeichnet**, daß ein Minimalwert für den Zulaufstrom voreingestellt wird, und daß bei Unterschreiten dieses Minimalwerts der Zulauf zu einer Maschine geschlossen wird.

6. Verfahren nach Anspruch 5, **dadurch gekennzeichnet**, daß bei Unterschreiten eines voreingestellten Minimalwerts des Zulaufstroms der Umlaufantrieb der Maschine abgeschaltet wird.

7. Verfahren nach Anspruch 1 bis 6, **dadurch gekennzeichnet**, daß im Zulauf zu jeder Maschine eine Spiegelmeßeinrichtung vorgesehen ist und daß der Zulauf bei überschreiten eines voreingestellten Werts des Spiegels gedrosselt und bei weiterem überschreiten geschlossen wird.

## Claims

1. Procedure for controlling a screening drum or travelling hand screen for suspended solids including a flushing unit with reversible flow to clean the screening surfaces of the screening drum or traveling band screen where the level difference between raw water inlet and clean water outlet is sensed continuously, and which includes a drive unit for the screening drum or travelling band screen with speed control, **characterized in that** a determined water level difference between raw water inlet and clean water outlet is preadjusted, that the speed of the drive unit is controlled so that the preadjusted level difference will be maintained and that the flushing unit with reversible flow is only switched on when the preadjusted highest speed has been reached.

2. Procedure according to claim 1, **characterized in that** the speed is reduced before the flushing unit is switched on.

3. Procedure according to one of the claims 1 or 2, **characterized in that** the number of revolutions of the screening drum or traveling hand screen is preadjusted to a certain number when the flushing unit is working.

4. Procedure according to claim 3, **characterized in that** the speed is controlled again by the preadjusted value for the water level difference once the flushing unit has stopped.

5. Procedure according to one or several claims 1 through 4 with at least two machines working simultaneously but with only one common influent distribution box, **characterized in that** a minimum value for the incoming flow is preadjusted and that the influent to one of the machines is closed if the flow volume falls below this value.

6. Procedure according to claim 5, **characterized in that** the drive unit of the machine is stopped if the incoming flow volume falls below the preadjusted minimum value.

7. Procedure according to the claims 1 through 6, **characterized in that** a level differential control unit is provided in the influent to each machine and that the flow volume is reduced if it exceeds a preadjusted value and that the influent is closed if the flow volume continues to exceed the preadjusted value.

## Revendications

1. Procédé destiné à commander un tamis à tambour ou une chaîne filtrante pour les matières en suspension comprenant un dispositif de lavage à contre-courant pour les surfaces filtrantes du tamis à tambour ou la chaîne filtrante, où la différence entre les niveaux d'eau polluée et d'eau clarifiée est mesurée continuellement et incluyant une unité d'entraînement avec régulateur de vitesse, **caractérisé en ce que** la différence entre les niveaux d'eau polluée et d'eau clarifiée est préréglée, que le régulateur de vitesse de l'unité d'entraînement est réglé de manière à maintenir la différence des niveaux sélectionnée et que le dispositif de lavage à contre-courant est actionné seulement au moment où la vitesse maximum préréglée a été atteinte.

2. Procédé selon revendication 1, **caractérisé en ce que** la vitesse sera réduite avant d'actionner le dispositif de lavage à contre-courant.

3. Procédé selon revendication 1 ou 2, **caractérisé en ce que** le nombre de tours du tamis à tambour ou chaîne filtrante est préréglé à un certain nombre lorsque le dispositif de lavage à contre-courant est actionné.

4. Procédé selon revendication 3, **caractérisé en ce que** la vitesse est contrôlée de nouveau par la valeur préréglée pour la différence des niveaux d'eau lorsque le lavage à contre-courant est terminé.

5. Procédé selon une ou plusieurs des revendications 1 à 4, avec au moins deux machines travaillant simultanément mais étant équipées d'un seul distributeur d'eau d'amenée, **caractérisé en ce qu'** une valeur minimum est présélectionnée pour le volume d'eau d'amenée et que l'arrivée d'eau pour une machine est fermée si le volume d'eau d'amenée reste en dessous de cette valeur minimum.

6. Procédé selon revendication 5, **caractérisé en ce que** l'unité d'entraînement de la machine est arrêtée si le volume d'eau d'amenée reste en dessous d'une valeur minimum préréglée.

7. Procédé selon les revendications 1 à 6, **caractérisé en ce que** dans l'entrée de chaque machine sera installé un dispositif de mesure de différence des niveaux d'eau et que le volume d'eau d'amenée sera diminué si celui-ci dépasse une valeur préréglée et que l'arrivée d'eau sera fermée si le volume d'eau continue à dépasser cette valeur.
